(19) Europäisches Patentamt
European Patent Office
Office européen des brevets

(11) EP 0 546 613 B1

(12) **EUROPEAN PATENT SPECIFICATION**

(45) Date of publication and mention
of the grant of the patent:
**27.08.1997 Bulletin 1997/35**

(51) Int Cl.6: **G06F 17/60**

(21) Application number: **92203710.6**

(22) Date of filing: **01.12.1992**

(54) **Method for optimising the placement of rectangular objects or parcels**

Verfahren zur Optimierung des Plazierens von rechteckigen Objekten oder Paketen

Procédé d'optimisation du placement des objets rectangulaires ou paquets

(84) Designated Contracting States:
**AT BE CH DE DK ES FR GB GR IT LI LU NL PT SE**

(30) Priority: **10.12.1991 NL 9102060**

(43) Date of publication of application:
**16.06.1993 Bulletin 1993/24**

(73) Proprietor: **Koninklijke PTT Nederland N.V.
2509 CH Den Haag (NL)**

(72) Inventor: **Snellen, Theodorus Cornelis
Christianus Maria
NL-2593 VR The Hague (NL)**

(56) References cited:
**EP-A- 0 389 985          US-A- 4 611 268**

- **EUROPEAN JOURNAL OF OPERATIONAL
  RESEARCH vol. 44, 1990, AMSTERDAM, NL
  pages 277 - 288 H. GEHRING ET AL. 'A
  computer-based heuristic for packing pooled
  shipment containers'**
- **THE JOURNAL OF THE APPAREL RESEARCH
  FOUNDATION, INC. vol. 2 no. 2, 1967, NEW
  YORK, N.Y., US pages 1 - 13 R.C. ART, JR
  'Computerized Marker Making: An Approach to
  the Pattern Layout Problem in the Garment
  Industry'**
- **MESUCORA vol. 2, 1963, PARIS, FR pages 128 -
  133 M. LERMOYEZ 'PROBLEMES
  D'OPTIMALISATION DE DECOUPE'**

**Description**

The invention relates to a method for optimising the placement of rectangular objects on an area already partially covered with objects of this type as well as a method for optimising the placement of objects in the form of a rectangular parallelepiped in a space already partially filled with objects of this type.

The determination of the most favourable area distribution when cutting mainly rectangular objects from a skin or sheet material, such as leather or metal, as well as the placement of objects in a space, such as the placement of postal packages in a container used by the post office, and the placement of containers of different dimensions in a cargo hold of, for example, a ship, has until now mainly been done manually, an operator, based on his experience, attempting to achieve optimum use of materials or optimum packing density. It is obviously desirable to automate this cutting or packing at least in part, in particular when this would be associated with a reduction in the loss of material or with an increased packing density, that is to say a better use of the material or the space available.

A number of such methods are known, e.g. from the documents cited in the European Search Report.

Dutch Patent Application 9100483, (corresponding to EP-A-0 507 375), which had not been laid open for inspection to the public in time, describes a method for calculating the free part areas or free spaces still available on an area partially filled with objects or in a space partially filled with objects, which method, even if the objects already placed have different dimensions, is considerably less complex than the methods known until that time.

The object of the present invention is to provide a method which makes it possible, based on the dimensions of a number of objects to be placed on an area or in a space, to determine an optimum combination of the objects to be placed and of the available free part areas or free spaces determined, for example, by means of the method according to Dutch Patent Application 9100483.

To this end, the invention provides a method for optimising the placement of rectangular physical objects on a physical area already partially covered with objects of this type, wherein the dimensions of the rectangle sides $X_p$ and $Y_p$ of a number of physical objects to be placed are determined, on the area a free rectangular part area having rectangle sides $X_s$ and $Y_s$ is determined, and a score value is established for each object, for each of the two possible orientations, by determining whether

1) the object in that orientation is too large for the part area; whether
2) all the dimensions of the object ($X_p$, $Y_p$) are smaller than the corresponding dimensions of the area ($X_s$, $Y_s$); whether
3) one and no more than one dimension of the area ($X_s$ or $Y_s$) is equal to the corresponding dimension of the object ($X_p$ or $Y_p$) and whether
4) two dimensions of the area ($X_s$ and $Y_s$) are equal to the corresponding dimensions of the parcel ($X_p$ and $Y_p$);

the score value is the more favourable, the higher the number of the step at which, when going through the steps 1) to 4) inclusive, an affirmative answer can be given, and the object with the most favourable score value is selected to be placed on the free part area in the orientation providing this score value.

The invention also provides a method for optimising the placement of physical objects in the form of a rectangular parallelepiped in a physical space already partially filled with objects of this type, wherein the dimensions of the rectangle sides $X_p$, $Y_p$ and $Z_p$ of a number of physical objects to be placed are determined, in the space a free space in the form of a rectangular parallelepiped having rectangle sides $X_s$, $Y_s$ and $Z_s$ is determined, and a score value is established for each object, for each of the six possible orientations in the free space, by determining whether

1) the object in that orientation is too large for the space; whether
2) all the dimensions of the object ($X_p$, $Y_p$, $Z_p$) are smaller than the corresponding dimensions of the free space ($X_s$, $Y_s$, $Z_s$); whether
3) one and no more than one dimension of the free space ($X_s$ or $Y_s$ or $Z_s$) is equal to the corresponding dimension of the object ($X_p$ or $Y_p$ or $Z_p$); whether
4) two and no more than two dimensions of the free space are equal to the corresponding dimensions of the parcel; and whether
5) three dimensions of the free space are equal to the corresponding dimensions of the parcel;

the score value is the more favourable, the higher the number of the step at which, when going through the steps 1) to 5) inclusive, an affirmative answer can be given, and the object with the most favourable score value is selected to be placed in the free space in the orientation providing this score value.

The invention will be explained below by reference to an exemplary embodiment for the placement of mainly rectangular parcels in a mainly rectangular space, although it is emphatically stated that the principle according to the invention is directly applicable to optimising the placement of objects on an area with particular dimensions, if instead of three dimensions only two dimensions are considered.

In the drawings:

Figure 1 shows a diagrammatic description of a first way of assessing the fit;
Figure 2 shows a diagrammatic description of a second way of assessing the fit;
Figure 3 shows a diagrammatic description of a third way of assessing the fit;
Figure 4 shows a diagrammatic description of a support criterion.
Figure 5 shows a diagrammatic description of another support criterion.

When assessing a parcel/space combination it is determined how well a given parcel in a defined position fits in a given free space. An assessment of this type in principle only requires the dimensions of the space and the parcel dimensions in relation thereto. The support of the parcel, a preference for a specific space or a preference for a specific position etc. may, if desired, subsequently be incorporated in the assessment.

In the example described the following dimensions are assumed.

Space dimensions: $(X_s, Y_s, Z_s)$
Parcel dimensions: $(X_p, Y_p, Z_p)$
Herein X is the depth, Y the width and Z the height of the space and the parcel, respectively.

First a description is given of how the situations are assessed where $X_p < X_s$ and $Y_p < Y_s$ and $Z_p < Z_s$. If one or more parcel dimensions are equal to the space dimensions, the assessment will generally have to be biased in a particular way, for example by an additional evaluation.

In general, an assessment of the measure of the fit can be approached in two ways. It is possible to assess how well a parcel fills the space or it is possible to assess how "good" is the shape of the remaining space.

Based on the firstmentioned criterion, it is easy to determine the degree of filling (C1):

$$C1 := [X_p/X_s] * [Y_p/Y_s] * [Z_p/Z_s]$$

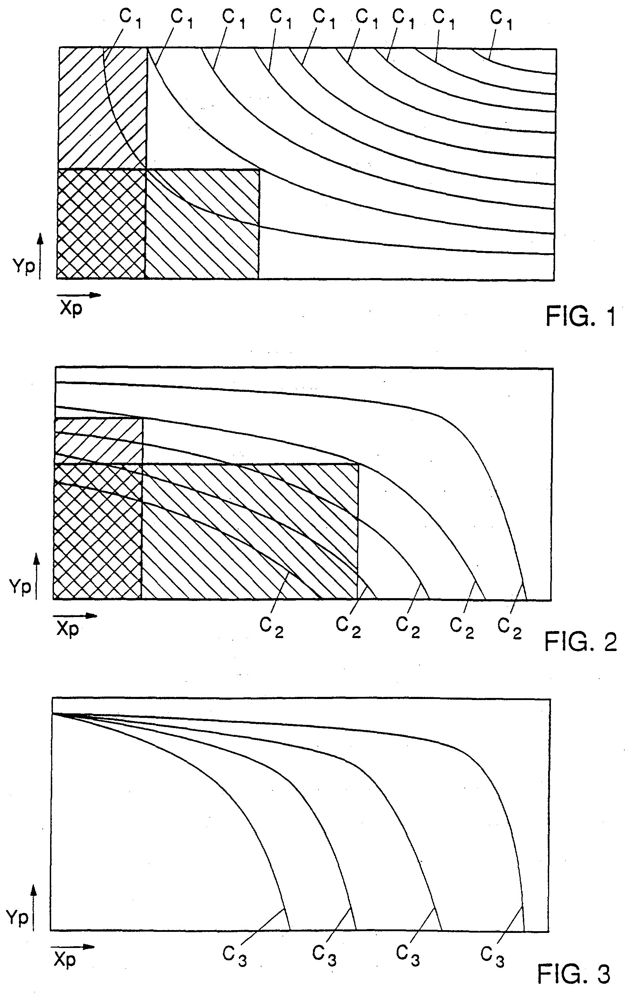

C1 is a number between 0 and 1, indicating what fraction of the space is filled. The greater the numerical value of C1, the better the fill. Figure 1 shows what this degree of filling means in practice. For this purpose, a number of isochors are shown in Figure 1, ie lines connecting those corners of parcels that provide an equal relative fill. For the sake of clarity, Figure 1 is shown in only two dimensions.

Figure 1 clearly shows a disadvantage of this assessment: relatively small parcels which divide the free space into two unattractively long narrow sections are given the same score as parcels which completely fill the space in one direction.

As it is usually desirable that the free spaces remaining after the placement of a parcel in a free space have readily usable dimensions, it is better to assess these remaining free spaces. The product (C2) of the dimensions remaining after the placement of a parcel, ie. of the remaining height, width and depth, proves to give, according to the invention, a good picture of the dimensioning of the remaining free spaces.

C2 is defined as:

$$C2 := [(X_s-X_p)/X_s] * [(Y_s-Y_p)/Y_s] * [(Z_s-Z_p)/Z_s]$$

C2 is again a number between 0 and 1. In this instance, however, it is the case that the smaller the numerical value of C2, the better the "fit". In the same way as for Figure 1, Figure 2 shows a number of lines with a constant value for C2.

Figure 2 clearly shows that parcels which fit reasonably in one direction, with the result that only one free space remains, are preferred to parcels which divide the space into two, with the result that C2 in principle constitutes a useful assessment criterion.

So far, however, no mention has been made of the actual load. In general, this is, for example as a consequence of gravity, asymmetric in the X, Y and Z direction. This asymmetry can also be incorporated in the assessment by emphasising the preferred orientation. This can be done with the help of the following formula:

$$C3 := [(X_s-X_p)/X_s]^k * [(Y_s-Y_p)/Y_s]^l * [(Z_s-Z_p)/Z_s]^m$$

By selecting different values for the powers k, l and m, the desired asymmetry can be established. Figure 3 shows, in the same way as Figures 1 and 2, the effect for different powers. The term with the highest power receives the greatest emphasis, as it will affect the score value the most. The score value C3, derived from C2, is again a number between 0 and 1, with the property that the assessment is the more favourable, the smaller the numerical value of C3.

As already explained above, the assessment of how well a parcel fits into a space only makes use of the three dimensions of the free space and the three dimensions of the parcel (length, width and height). Each parcel may, in principle, be placed in the space in six orientations.

|    | Orientation: | Rotation: |
|----|------------|-----------|
| 1) | Lp-Xs, Wp-Ys, Hp-Zs | None |
| 2) | Lp-Xs, Hp-Ys, Wp-Zs | Around length axis |
| 3) | Wp-Xs, Lp-Ys, Hp-Zs | Around height axis |
| 4) | Wp-Xs, Hp-Ys, Lp-Zs | Around height and length axis |
| 5) | Hp-Xs, Wp-Ys, Lp-Zs | Around width axis |
| 6) | Hp-Xs, Lp-Ys, Wp-Zs | Around height and width axis |

If parcels may not be tilted, the number of orientations can be restricted to the orientations 1) and 3). In principle, however, each of the six orientations is given a score. For a number of parcels N and a number of spaces M there are then N×M×6 assessed situations.

If a parcel fits in the space, ie. the space in all dimensions is larger than the parcel in the orientation chosen, based on the definition of C3 a "measure of fit" is determined for each dimension.

$$\underline{X\text{-direction}}: dX := [(Xs\text{-}Xp)/Xs]^{k}$$

$$\underline{Y\text{-direction}}: dY := [(Ys\text{-}Yp)/Ys]^{l}$$

$$\underline{Z\text{-direction}}: dZ := [(Zs\text{-}Zp)/Zs]^{m}$$

The fit of a parcel in a free space can now be assessed, according to the invention, for each combination of parcel orientation and space, in five consecutive steps:

| Step: | | Score: |
|---|---|---|

**1:** Is the parcel in this orientation too large for the space?

NO  YES ————————————> >1000

↓

**2:** Are all dimensions of the parcels smaller than the corresponding dimensions of the space?

NO  YES ————————————> dX*dY*dZ

↓

**3:** Does one measurement (e.g. Zp) of the space correspond exactly to one measurement of the parcel?

NO  YES ————————————> >dX*dY-1

↓

**4:** Do two measurements (e.g. Zp, Yp) of the space correspond to two measurements of the parcel?

NO  YES ————————————> >dX-2

↓

**5:** The parcel fits the space exactly! ————> -3

As dX, dY and dZ all have values between 0 and 1, the following assessments are possible:

| | | |
|---|---|---|
| 1) | Parcel does not fit | 1000 < score |
| 2) | Parcel fits easily | 0 < score < 1 |
| 3) | One measurement fits precisely | -1 < score < 0 |
| 4) | Two measurements fit precisely | -2 < score < -1 |
| 5) | Parcel fits precisely | score = -3 |

In the case of the assessments 3, 4 and 5, as already mentioned above, an additional factor has been incorporated in the assessment, as a result of which the assessment is more favourable than in the case where the parcel fits easily in the free space.

The best combination of parcel orientation and space is that with the lowest score value. In the case of a method tested in practice, according to the invention, for loading a container, choosing k = 2, l = 3 and m = 1 gave a stronger preference to the Y direction (l = 3) and, to a lesser extent, the X direction (k = 2). The upright positioning of parcels is thereby opposed, because m < k,l. The stronger preference for the Y direction (k, l) is to do with the two lateral walls of the container.

Because the term "free space", as defined in Dutch Patent Application 9100483, is very general, it is also necessary to take into account, during loading, the support of a parcel. Because of gravity the choice made will always be to place the parcel in a lower corner of a free space. Other places at the bottom of a free space are in principle also possible, but they increase the calculation effort required. Depending on the support, a choice can be made from four lower corners: rear left, bottom; rear right, bottom; front left, bottom; front right, bottom.

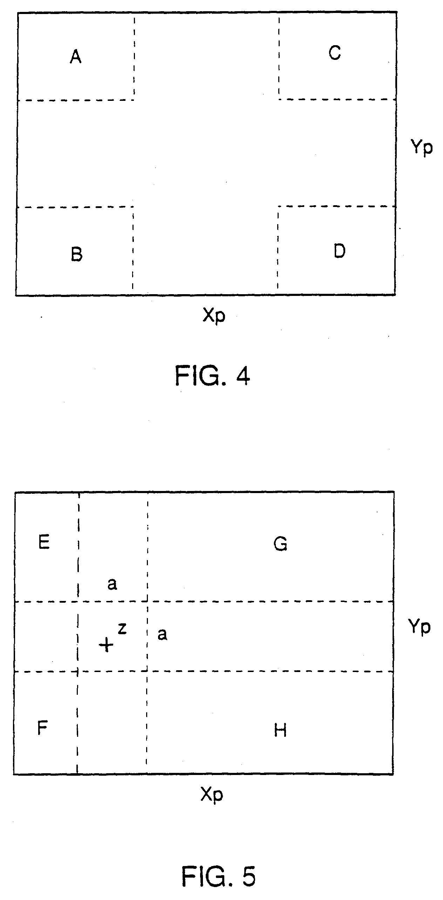

By the method sketched out in Figure 4 it is established whether there is sufficient support. Four "support rectangles" A, B, C, and D, are defined in the bottom face of a parcel 1. The size of these rectangles is defined by the parcel dimensions and the maximum permitted overhang percentage d. For a parcel not to tip over, d < 0.5 applies.

For a support to be acceptable, it is required that each of the four rectangular areas is supported in at least one point. The minimum support (Xsu, Ysu) can be calculated as follows:

$$Xsu := Xp(1\text{-}2^*d) \text{ and } Ysu := Yp(1\text{-}2^*d)$$

if for example d:= 0.3, there follows:

$$Xsu = 0.4^*Xp \text{ and } Ysu = 0.4^*Yp$$

If sufficient support cannot be found in any corner of the free space, the score value of that particular combination of parcel orientation and space is set at > 1000.

To obtain effective support it is also possible, in particular in the case of parcels with a strongly asymmetrically placed centre of gravity, to predetermine the centre of gravity of the parcels to be placed. Figure 5 shows by what method, based on the centre of gravity, the support can be determined. For this purpose an area, for example a square with sides a, is defined around the centre of gravity Z, and support rectangles E, F, G, and H are again defined adjacent to the corner points of the square. Effective support again requires in this case that each of the four rectangular areas E, F, G, and H are supported at at least one point. The square around the centre of gravity Z is excluded from the support rectangles E, F, G, and H in order to prevent the parcel coming to rest, in an unstable manner, on a single parcel which is situated below the area around the centre of gravity. The size of the area around the centre of gravity is related to the dimensions of the parcel and can be determined experimentally.

It is to be noted that the assessment of the support produces a "true or false" result, not a score value.

Finally, in assessing the support of a parcel, the fact may also be taken into account that the parcel to be placed touches, with one or more of its lateral faces, one or more parcels already present. It will be clear that if the parcel shown in Figure 4 comes to rest with the right-hand lateral face shown in the figure against an adjacent parcel, it is in essence sufficient if only the support rectangles A and B are each supported at one point on their bottom side.

Various options for the choice of a corner can be incorporated into the method:

1) Choice from 2 rearmost corners with a preference for left hand.
2) Random choice from 2 rearmost corners.
3) Choice from 4 corners in a particular sequence:
4) Random choice from 4 corners.

In most cases, the above choices are restricted because some corners will not give sufficient support. It goes without saying that the support plays no part in determining the most favourable placement of objects on the free part areas of a plane area.

It may also be attractive to incorporate, in the method, a preference for particular free spaces. In this way it is possible, for example, first to stack the floor densely, or the rear wall. By adjusting the score value, implicitly a greater or lesser preference may be given to particular free spaces.

| Preference for lowest spaces: | |
|---|---|
| Maximum height (container height) | Zm |

(continued)

| Preference for lowest spaces: | |
| --- | --- |
| Bottom edge free space | ZBv |
| Relative height in the container | $Rz := (Zm-ZBv)/Zm$ |
| "Weighting" parameter for the height | Pz e.g.: $0<Pz<3$ |

Adjusted score (C3) : $C3 := C3- Pz * Rz$

| Preference for rearmost spaces: | |
| --- | --- |
| Maximum depth (container depth) | Xm |
| Rear edge free space | XRv |
| Relative depth in the container | $Rx := (Xm-XRv)/Xm$ |
| "Weighting" parameter for the depth | Px e.g.: $0<Px<3$ |

Adjusted score (C3) : $C3 := C3- Px * Rx$

The values of Px and Pz can be determined experimentally for specific applications.

In the loading method, the stability of each parcel per se may also be taken into account. A criterion for this purpose may be, for example, that the height Zp of the parcel may not be greater than a particular multiple, not necessarily an integer, of the smallest of the other two dimensions of the parcel, ie. the length Xp or the width Yp.

## Claims

1. Method for optimising the placement of rectangular physical objects on a physical area already partially covered with objects of this type, wherein the dimensions of the rectangle sides Xp and Yp of a number of physical objects to be placed are determined, on the area a free rectangular part area having rectangle sides Xs and Ys is determined, and a score value is established for each object, for each of the two possible orientations, by determining whether

1) the object in that orientation is too large for the part area; whether
2) all the dimensions of the object (Xp, Yp) are smaller than the corresponding dimensions of the area (Xs, Ys); whether
3) one and no more than one dimension of the area (Xs or Ys) is equal to the corresponding dimension of the object (Xp or Yp) and whether
4) two dimensions of the area (Xs and Ys) are equal to the corresponding dimensions of the parcel (Xp and Yp);

the score value is the more favourable, the higher the number of the step at which, when going through the steps 1) to 4) inclusive, an affirmative answer can be given, and the object with the most favourable score value is selected to be placed on the free part area in the orientation providing this score value.

2. Method according to Claim 1, characterised in that if all the dimensions of the object (Xp, Yp) are smaller than the corresponding dimensions of the area (Xs, Ys), the score value is determined by:

$$\text{score value} := [(Xs-Xp)/Xs]^{k} * [(Ys-Yp)/Ys]^{l}$$

with k and $l \geq 1$.

3. Method for optimising the placement of physical objects in the form of a rectangular parallelepiped in a physical space already partially filled with objects of this type, wherein the dimensions of the rectangle sides Xp, Yp and Zp of a number of physical objects to be placed are determined, in the space a free space in the form of a rectangular parallelepiped having rectangle sides Xs, Ys and Zs is determined, and a score value is established for each object, for each of the six possible orientations in the free space, by determining whether

> 1) the object in that orientation is too large for the space; whether
> 2) all the dimensions of the object (Xp, Yp, Zp) are smaller than the corresponding dimensions of the free space (Xs, Ys, Zs); whether
> 3) one and no more than one dimension of the free space (Xs or Ys or Zs) is equal to the corresponding dimension of the object (Xp or Yp or Zp); whether
> 4) two and no more than two dimensions of the free space are equal to the corresponding dimensions of the parcel; and whether
> 5) three dimensions of the free space are equal to the corresponding dimensions of the parcel;

the score value is the more favourable, the higher the number of the step at which, when going through the steps 1) to 5) inclusive, an affirmative answer can be given, and the object with the most favourable score value is selected to be placed in the free space in the orientation providing this score value.

4. Method according to Claim 3, characterised in that if all the dimensions of the object (Xp, Yp, Zp) are smaller than the corresponding dimensions of the free space (Xs, Ys, Zs), the score value is determined by:

$$\text{score value} := [(Xs\text{-}Xp)/Xs]^k * [(Ys\text{-}Yp)/Ys]^l * [(Zs\text{-}Zp)/Zs]^m$$

with k, l and m $\geq$ 1.

5. Method according to Claims 3 or 4, characterised in that it is also determined whether a parcel is sufficiently supported, and in that a parcel is rejected for placement if the support criterion is not met.

6. Method according to Claim 5, characterised in that four imaginary areas are defined on the bottom face of an object to be placed, which areas do not overlap each other and which each comprise a corner point of the bottom face, and in that the support criterion is met if each of the areas upon placement is supported at at least one point.

7. Method according to Claim 6, characterised in that the centre of gravity on the bottom face of the object is also determined, and in that an area on the bottom face is defined around the centre of gravity, which area may not form part of said imaginary areas.

8. Method according to Claims 6 or 7, characterised in that if an object comes to rest with a lateral face against an adjacent object, said imaginary areas on the bottom face of the object need not be supported adjacent to that lateral face.

**Patentansprüche**

1. Verfahren zur Optimierung der Anordnung von rechteckigen körperlichen Objekten auf einem körperlichen Bereich, der bereits teilweise mit Objekten dieses Typs gefüllt ist, wobei die Dimensionen der Rechteckseiten Xp und Yp von einer Anzahl von anzuordnenden körperlichen Objekten festgestellt werden, wobei auf dem Bereich ein freier rechteckiger Teilbereich mit Rechteckseiten Xs und Ys festgestellt wird und wobei eine Bewertungszahl für jedes Objekt für jede der beiden möglichen Ausrichtungen errechnet wird, indem festgestellt wird, ob

> 1) das Objekt in dieser Ausrichtung zu gross für diesen Teilbereich ist, ob
> 2) alle Dimensionen des Objektes (Xp, Yp) kleiner als die zugehörigen Dimensionen des Bereiches (Xs, Ys) sind, ob
> 3) eine und nicht mehr als eine Dimension des Bereiches (Xs oder Ys) gleich der zugehörigen Dimension des Objektes (Xp oder Yp) ist und ob
> 4) zwei Dimensionen des Bereiches (Xs und Ys) gleich zu den zugehörigen Dimensionen des Pakets (Xp und Yp) sind,

wobei die Bewertungszahl die günstigere ist, bei der die Nummer des Schrittes höher ist, bei der beim Durchgehen durch die Schritte 1) bis 4) eine positive Antwort gegeben werden kann und wobei das Objekt mit der vorteilhaftesten Bewertungszahl ausgewählt wird, um auf dem freien Teilbereich entsprechend der durch die Bewertungszahl vorgegebenen Ausrichtung angeordnet zu werden.

2. Verfahren nach Anspruch 1, dadurch gekennzeichnet, dass alle Dimensionen des Objektes (Xp, Yp) kleiner als die zugehörigen Dimensionen des Bereiches (Xs, Ys) sind, wobei die Bewertungszahl bestimmt wird durch:

$$\text{Bewertungszahl} := [(Xs\text{-}Xp)/Xs]^k * [(Ys\text{-}Yp)/Ys]^l * [(Zs\text{-}Zp)/Zs]^m$$

mit k und l $\geq$ 1.

3. Verfahren zur Optimierung der Anordnung von körperlichen Objekten in Gestalt von Parallelepipeden mit rechten Winkeln in einem körperlichen Raum, der bereits teilweise mit Objekten dieses Typs gefüllt ist, wobei die Dimensionen der Rechteckseiten Xp, Yp und Zp von einer Anzahl von anzuordnenden körperlichen Objekten festgestellt werden, wobei in dem Raum ein freier Raum in Gestalt eines Parallelepipeds mit rechten Winkeln mit Rechteckseiten Xs, Ys und Zs festgestellt wird und wobei eine Bewertungszahl für jedes Objekt für jede der sechs möglichen Ausrichtungen im freien Raum errechnet wird, indem festgestellt wird, ob

1) das Objekt in dieser Ausrichtung zu gross für diesen Teilbereich ist, ob
2) alle Dimensionen des Objektes (Xp, Yp, Zp) kleiner als die zugehörigen Dimensionen des freien Raumes (Xs, Ys, Zs) sind, ob
3) eine und nicht mehr als eine Dimension des freien Raumes (Xs oder Ys oder Zs) gleich der zugehörigen Dimension des Objektes (Xp oder Yp oder Zp) ist, ob
4) zwei und nicht mehr als zwei Dimensionen des freien Raumes zu den zugehörigen Dimensionen des Pakets gleich sind, und ob
5) drei Dimensionen des freien Raumes gleich zu den zugehörigen Dimensionen des Pakets sind,

wobei die Bewertungszahl die günstigere ist, bei der die Nummer des Schrittes höher ist, bei der beim Durchgehen durch die Schritte 1) bis 5) eine positive Antwort gegeben werden kann und wobei das Objekt mit der vorteilhaftesten Bewertungszahl ausgewählt wird, um in dem freien Raum entsprechend der durch die Bewertungszahl vorgegebenen Ausrichtung angeordnet zu werden.

4. Verfahren nach Anspruch 3, dadurch gekennzeichnet, dass alle Dimensionen des Objektes (Xp, Yp, Zp) kleiner als die zugehörigen Dimensionen des freien Raumes (Xs, Ys, Zs) sind, wobei die Bewertungszahl bestimmt wird durch:

$$\text{Bewertungszahl} := [(Xs\text{-}Xp)/Xs]^k * [(Ys\text{-}Yp)/Ys]^l * [(Zs\text{-}Zp)/Zs]^m$$

mit k, l und m $\geq$ 1.

5. Verfahren nach Anspruch 3 oder 4, dadurch gekennzeichnet, dass ebenfalls festgestellt wird, ob ein Paket in ausreichender Weise unterstützt wird, und dass ein Paket zur Anordnung zurückgewiesen wird, falls das Unterstützungskriterium nicht erfüllt wird.

6. Verfahren nach Anspruch 5, dadurch gekennzeichnet, dass vier imaginäre Bereiche auf der Bodenfläche eines anzuordnenden Objektes definiert werden, die einander nicht überlappen und die jeweils einen Eckpunkt der Bodenfläche umfassen, und dass das Unterstützungskriterium erfüllt ist, falls jeder der Bereiche bei einer Anordnung in zumindest einem Punkt unterstützt wird.

7. Verfahren nach Anspruch 6, dadurch gekennzeichnet, dass der Schwerpunkt an der Bodenfläche des Objektes ebenfalls bestimmt wird und dass ein Bereich an der Bodenfläche um den Schwerpunkt herum definiert wird, der nicht Teil der besagten imaginären Bereiche sein kann.

8. Verfahren nach einem der Ansprüche 6 oder 7, dadurch gekennzeichnet, dass, wenn ein Objekt mit einer Seitenfläche gegen ein benachbartes Objekt angrenzt, die imaginären Bereiche auf der Bodenfläche des Objektes nicht zu unterstützt werden brauchen, die dieser Seitenfläche benachbart sind.

**Revendications**

1. Procédé pour optimiser le placement d'objets physiques rectangulaires sur une surface physique déjà partiellement couverte d'objets de ce type, dans lequel on détermine les dimensions des côtés rectangulaires Xp et Yp de plusieurs objets physiques qu'il s'agit de placer, on détermine sur la surface une surface partielle rectangulaire libre ayant des côtés rectangulaires Xs et Ys, et on établit une note pour chaque objet, pour chacune des deux orientations possibles, en déterminant si

(1) l'objet placé dans cette orientation est trop grand pour la surface partielle ; si
(2) toutes les dimensions de l'objet (Xp, Yp) sont plus petites que les dimensions correspondantes de la surface (Xs, Ys) ; si
(3) une et pas plus d'une dimension de la surface (Xs ou Ys) est égale à la dimension correspondante de l'objet (Xp ou Yp) et si
(4) deux dimensions de la surface (Xs et Ys) sont égales aux dimensions correspondantes du colis (Xp et Yp) ;

la note est d'autant plus favorable que le numéro de la phase à laquelle, lorsqu'on parcourt les phases (1) à (4) incluse, une réponse affirmative peut être donnée est plus grand et l'objet possédant la note la plus favorable est choisi pour être placé sur la surface partielle libre dans l'orientation qui donne cette note.

2. Procédé selon la revendication 1, caractérisé en ce que, si toutes les dimensions de l'objet (Xp, Yp) sont plus petites que les dimensions correspondantes de la surface (Xs, Ys), la valeur de note est déterminée par :

$$\text{note} := [(Xs-Xp)/Xs]*[(Ys-Yp)/Ys]^l$$

avec k et l > 1.

3. Procédé pour optimiser le placement d'objets présentant la forme d'un parallélépipède rectangle dans un espace physique déjà partiellement rempli d'objets de ce type, dans lequel on détermine les dimensions des côtés rectangulaires Xp, Yp et Zp de plusieurs objets physiques qu'il s'agit de placer, on détermine dans l'espace un espace libre présentant la forme d'un parallélépipède rectangle ayant des côtés rectangulaires Xs, Yx et Zs et on établit une note pour chaque objet, pour chacune des six orientations possibles dans l'espace libre, en déterminant si :

1) l'objet placé dans cette orientation est trop grand pour l'espace ; si
2) toutes les dimensions de l'objet (Xp, Yp, Zp) sont plus petites que les dimensions correspondantes (Xs, Ys, Zs) ; si
3) une et pas plus d'une des dimensions de l'espace libre (Xs, Ys, Zs) est égale à la dimension correspondante de l'objet (Xp, Yp ou Zp) ; si
4) deux et pas plus de deux dimensions de l'espace libre sont égales aux dimensions correspondantes du colis ; et si
5) trois dimensions de l'espace libre sont égales aux dimensions correspondantes du colis ;

la note est d'autant plus favorable que le numéro de la phase à laquelle, lorsqu'on parcourt les phases 1) à 5) incluse, une réponse affirmative peut être donnée est plus grand, et l'objet possédant la note la plus favorable est choisi pour être placé dans l'espace libre dans l'orientation qui donne cette note.

4. Procédé selon la revendication 3, caractérisé en ce que, si toutes les dimensions de l'objet (Xp, Yp) sont plus petites que les dimensions correspondantes de la surface (Xs, Ys), la note est déterminée par :

$$\text{note} := [(Xs-Xp)/Xs]^k*[(Ys-Yp)/Ys]^l*[(Zs-Zp)/Zs]^m$$

5. Procédé selon la revendication 3 ou 4, caractérisé en ce qu'on détermine aussi si un colis a un appui suffisant et en ce qu'on rejette un colis pour le placement si le critère d'appui n'est pas satisfait.

6. Procédé selon la revendication 5, caractérisé en ce qu'on définit quatre surfaces imaginaires sur la face inférieure d'un objet à placer, lesquelles surfaces ne se recouvrent pas mutuellement et comprennent un point d'angle de la face inférieure et en ce que le critère d'appui est satisfait si, après le placement, chacune des surfaces est appuyée en au moins un point.

7. Procédé selon la revendication 6, caractérisé en ce qu'on détermine aussi le centre de gravité de la surface inférieure de l'objet et en ce qu'on définit une surface sur la surface inférieure autour du centre de gravité, laquelle surface ne doit pas faire partie desdites surfaces imaginaires.

8. Procédé selon la revendication 7, caractérisé en ce que, si un objet vient s'appuyer par une surface latérale contre un objet adjacent, lesdites surfaces imaginaires de la surface inférieure de l'objet ne demandent pas à être appuyées dans la région adjacente à cette face latérale.

FIG. 1

FIG. 2

FIG. 3

FIG. 4

FIG. 5